# EUROPÄISCHE PATENTSCHRIFT

(11) **EP 3 404 313 B1**
(45) Veröffentlichungstag und Bekanntmachung des Hinweises auf die Patenterteilung: **02.12.2020**
(21) Anmeldenummer: 18166107.5
(22) Anmeldetag: 06.04.2018
(51) Int. Cl.: F21S 41/143, F21S 41/265, F21S 41/43, F21V 5/00, F21Y 115/10

(54) **KRAFTFAHRZEUGSCHEINWERFER MIT EINEM MIKROPROJEKTOREN AUFWEISENDEN LICHTMODUL**
MOTOR VEHICLE HEADLAMP WITH A LIGHT MODULE WITH MICROPROJECTORS
PHARE DE VÉHICULE AUTOMOBILE POURVU DE MODULE LUMINEUX COMPORTANT DES MICROPROJECTEURS

(30) Priorität: 18.05.2017 DE 102017110886
(43) Veröffentlichungstag der Anmeldung: 21.11.2018
(73) Patentinhaber: Automotive Lighting Reutlingen GmbH, 72762 Reutlingen (DE)
(72) Erfinder: STEFANOV, Emil P., 72762 Reutlingen (DE); BUCHBERGER, Christian, 72770 Reutlingen (DE)
(74) Vertreter: DREISS Patentanwälte PartG mbB

(56) Entgegenhaltungen:
- EP-A1- 0 738 903
- DE-A1- 10 039 086
- DE-A1-102015 107 644
- US-A1- 2012 106 164

## Beschreibung

Die vorliegende Erfindung betrifft einen Kraftfahrzeugscheinwerfer nach dem Oberbegriff des Anspruchs 1. Ein solcher Kraftfahrzeugscheinwerfer ist aus der WO 2015/058227 A1 bekannt und weist ein Lichtmodul auf, das eine Lichtquelle, eine Licht der Lichtquelle sammelnde Primäroptik und eine Mehrzahl von Mikroprojektoren aufweist, von denen jeder jeweils eine Eingangslinse, eine Ausgangslinse und eine zwischen der Eingangslinse und der Ausgangslinse angeordnete Blende aufweist. Die Eingangslinse, die Blende und die Ausgangslinse weisen eine sich bei bestimmungsgemäßer Verwendung des Kraftfahrzeugscheinwerfers parallel zu einer horizontalen Richtung erstreckende Breite und eine sich parallel zu einer vertikalen Richtung erstreckende Höhe auf. Die Primäroptik, die Eingangslinse, die Blende und die Ausgangslinse jeweils eines Mikroprojektors sind so angeordnet, dass aus der Primäroptik austretendes Licht der Lichtquelle die Eingangslinse beleuchtet und aus der Eingangslinse austretendes Licht der Lichtquelle die Ausgangslinse beleuchtet.

Konventionelle Projektionsmodule für Kraftfahrzeugscheinwerfer weisen eine Optik-Gesamtbautiefe in der Größenordnung von 75 mm bis über 120 mm auf. Unter diese Kategorie fallen Halogen- und Xenon-Scheinwerfer. Lichtquellen beider Kategorien werden im Betrieb mehrere Hundert Grad heiß. In ihrer Nähe stellen sich Temperaturen ein, die mit dem Einsatz feinstrukturierter Kunststoff-Optiken nicht kompatibel sind.

Erst in den letzten 10 bis 15 Jahren wurde es durch den Einsatz kälterer Lichtquellen, wie z.B. LEDs oder LaserDioden, die eine Betriebstemperatur von maximal 150°C vertragen können, möglich, Kunststoff-Optiken in der Nähe der Lichtquelle zu verwenden. Das machte die Entwicklung komplexerer optischer Ansätze möglich, wie z.B. Voll-LED und/oder Matrix-LED-Scheinwerfer. Solche Ansätze wurden am Anfang ihrer Entwicklung durch diskret aufgebaute Lichtquellenmodule geprägt. Ein Matrix-Scheinwerfer mit einer strukturierten Silikonoptik und einer abbildenden Optik ist aus der DE 10 2009 053 581 A1 bekannt.

Mit diesen Ansätzen konnten nicht alle Möglichkeiten der Miniaturisierung ausgeschöpft werden, da zur Formung von Matrix-Lichtverteilungen noch vergleichsweise große Primäroptiken und einzelne große Ein-Strahlengang-Projektionsoptiken zum Einsatz kamen. Die Größe der Primäroptiken ist aus Herstellungsgründen nach unten beschränkt. Die sehr komplexen Lichtleiter-basierten Primäroptiken werden in einem Kunststoffspritzvorgang hergestellt, der entsprechend feine Formkavitäten erfordert. Bei komplexen Silikonlichtleitern wird die Verkleinerung zunehmend aufwändig und letztendlich beliebig teuer. Solche Scheinwerfermodule besitzen eine Optik-Bautiefe, die ebenfalls in der Größenordnung von 75 mm bis über 120 mm liegt

Es ist eine generelle Tendenz, dass der für Kraftfahrzeugscheinwerfer zur Verfügung stehende Bauraum in immer komplexer werdenden Kraftfahrzeugen immer knapper wird. Daraus ergeben sich Forderungen nach einer Miniaturisierung von Kraftfahrzeugscheinwerfern. Es haben sich verschiedene Lösungsansätze ergeben. In einem Lösungsansatz wird die Idee eines Dia- bzw. Kinoprojektors aufgegriffen. Die Lichtverteilung wird durch eine Maske in der Brennfläche eines geeigneten Projektionsobjektivs generiert. Das kann sowohl ein Filter (Dia, LCD) als auch ein feinstrukturiertes Spiegelarray (Digital Light Processing, DLP)sein, welches angeleuchtet wird und durch hochfrequentes Kippen einzelner Mikrospiegel eine dynamische Lichtverteilung generiert, die ebenfalls über ein Projektionsobjektiv abgebildet wird. Entsprechend kann auch eine feinstrukturierte, auf Pixelebene steuerbare integrierte LED-Lichtquelle über ein Projektionsobjektiv abgebildet werden, so dass ihre feinstrukturiert veränderbare Lichtquellenverteilung auf die Fahrbahn projiziert wird.

In all diesen Fällen wird jeweils ein abbildendes Objektiv verwendet. Eine Verkleinerung des Objektivs würde voraussetzen, dass die Spiegel- oder LED-Arrays entsprechend verkleinert werden können. Einem solchen Vorhaben sind zurzeit technische Grenzen gesetzt, so dass die Verkleinerung solcher Scheinwerfer mit nur einem optischen Strahlengang nicht ausreichend vorangetrieben werden kann. Als Folge ist auch die Bautiefe solcher Scheinwerfer nach unten auf Werte zwischen etwa 60 mm und bis über 100 mm beschränkt.

Weitere Lösungsansätze sehen vor, nicht die Primäroptik, sondern die abbildende Sekundäroptik zu strukturieren. Derartige Ansätze werden in der EP 999 407 und der AT 514 967 verfolgt. Beim Gegenstand der AT 514 967 kollimiert die Primäroptik eine weitwinklige Quellen-Lichtverteilung. Diese Lichtbündel durchlaufen parallel oder nahezu parallel zueinander orientierte Einkoppeloptiken. Jede Einkoppeloptik fokussiert ein sie beleuchtendes Lichtbündel und generiert jeweils eine Querschnitt-Lichtverteilung, die als virtuelle Lichtquelle für einen im Strahlengang folgenden Mikroprojektor dient.

Bei der eingangs genannten WO2015/058227A1 wird jeder Einkoppeloptik, bzw. jedem fokussierten Lichtbündel ein Mikroprojektor nachgeschaltet, in den das jeweilige Lichtbündel eintritt. Die Einkoppeloptik übernimmt die Lichtteilung und formt jede der Lichtverteilungen der virtuellen Lichtquellen, die ihr zugeordneter Mikroprojektor auf die Straße projiziert. An den Orten der virtuellen Lichtquellen werden Mikroblenden angeordnet, um damit gewünschte Hell-Dunkel-Grenzen (HDG) zu generieren.

Dabei ist jede abzubildende Lichtverteilung und jede Blende so klein, dass unter Beibehaltung der Abbildgröße, d.h. mit einer Änderung des Abbildungsmaßstabes, eine signifikante Verkürzung der Brennweite und damit der Bautiefe solcher Mikroprojektoren erreicht werden kann. Es handelt sich um eine Verkürzung um den Faktor von ca. 1/3 bis 1/8 im Vergleich zu einem konventionellen Projektor. Maßgeblich für die Verkleinerung sind die Größe der Lichtquelle und ihre Leuchtdichte. Alle abgebildeten Lichtverteilungen überlagern sich auf der Fahrbahn zu einer Gesamtlichtverteilung.

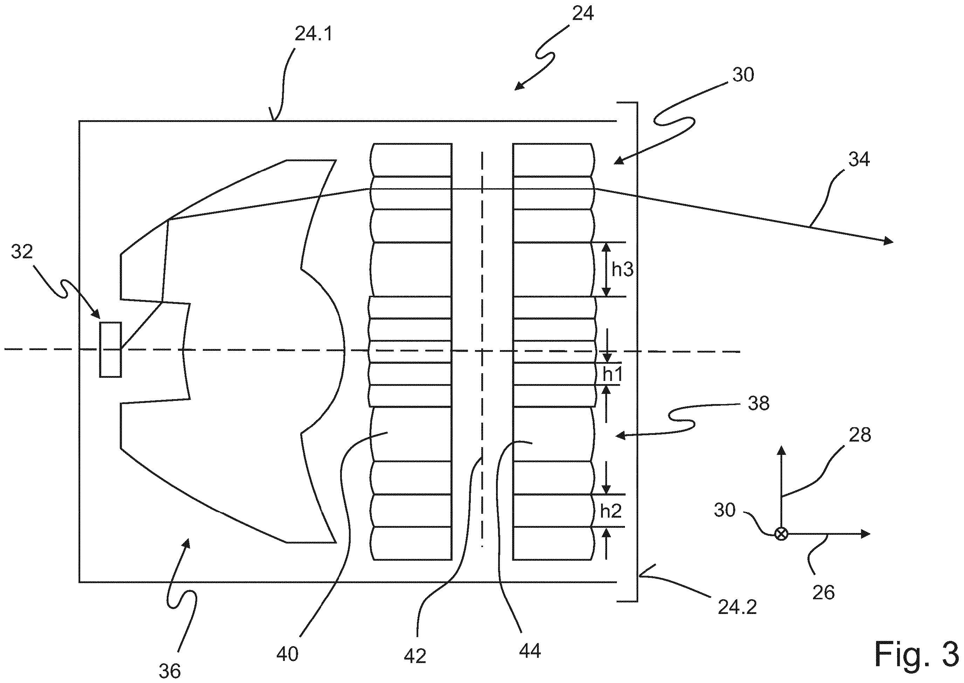

Nach der WO2015/058227 A1 werden Lichtbündel, die zu einer Gesamtlichtverteilung überlagert werden, durch von Lichtbündel zu Lichtbündel verschiedene Masken beschnitten (siehe dort Figur 3 und 3b), um eine Gesamtlichtverteilung mit einer gewünschten Form und Helligkeitsverteilung zu erzeugen (dort Figur 3a). Faktisch werden dabei zahlreiche überflüssige Hell-Dunkel-Grenzen abgebildet. Wie man dort erkennen kann, überlagern sich die verschieden geformten Teillichtverteilungen zu einer Gesamtlichtverteilung. Nicht jede Teillichtverteilung besitzt die gleiche Hell-Dunkel-Grenze. Zum Beispiel enthält LV2 einen sog. 15°-Anstieg, während LV1, LV3, LV4, LVS (dort Fig. 3b) eine horizontale Hell-Dunkel-Grenze aufweisen.

Wenn man davon ausgeht, dass jede Maske/Blende in der Figur 3 der WO2015/058227A1 gleich stark beleuchtet wird, ist unmittelbar ersichtlich, dass dort viel Licht abgeschattet wird, was zahlreiche Nachteile mit sich bringt: Um eine vorgegebene Helligkeit auf der Straße zu erzielen, müssen viele Lichtquellen verwendet werden, was teuer ist. Viele Lichtquellen erzeugen auch vergleichsweise viel Wärme, was große und schwere Kühlkörper erfordert. Durch die Überlagerung breiter Grundlichtverteilungen (dort insbesondere LV1) mit einem Abblendlichtspot (dort LV2) kann es auch passieren, dass die größte Helligkeit unnötig weit unterhalb des Horizonts erzielt wird, was die Reichweite nachteilig einschränkt.

Die Lichtverteilung eines Abblendlichtspots mit regelkonformer Hell-Dunkel Grenze erstreckt sich horizontal z.B. nur bis +/-20°H und vertikal z.B. nur von +0,43°V bis -4°V. Um eine komplette Abblendlichtverteilung zusammenzustellen, die Anteile bis z.B. +/-40° horizontal und bis -10° vertikal aufweisen kann, benötigt man eine zusätzliche Grundlicht-Verteilung. Grundlichtmodule leuchten horizontal z.B. +/-40° aus. Dabei erzeugen Grundlichtmodule oft eine durchgezogene horizontale Hell-Dunkel-Grenze die bei Rechtsverkehr links stellenweise nicht höher als -0,57° unter dem Horizont liegen darf. Wegen des horizontalen Verlaufs liegt sie auch rechts nicht höher. Wenn eine solche Grundlichtverteilung in eine Abblendlichtverteilung integriert ist, worin links aber in horizontaler Richtung ab -10° und rechts in horizontaler Richtung ab ca. +1,5° hohe Intensitäten über dem Horizont gefordert werden, bleibt die Hell-Dunkel-Grenze der Grundlichtverteilung links und insbesondere rechts sichtbar und stört die Gesamterscheinung. Außerdem erreicht die Abblendlichtreichweite nur suboptimale Werte, da sich das erforderliche zulässige Helligkeitsmaximum (kleiner als 43.750 cd) eventuell unterhalb des Horizonts, am Übergang zur Grundlichtverteilung, ergibt.

Ausgehend von der der WO2015/058227 A1, die bereits die Forderung zur Bauraumreduktion erfüllt, haben sich die Erfinder die Aufgabe gestellt, einen Kraftfahrzeugscheinwerfer bereitzustellen, der bei nicht größerem Bauraumbedarf effizienter arbeitet als der bekannte Scheinwerfer, eine homogene, farblose Abblendlichtverteilung erzeugt, die einen Winkelumfang von über +/- 40 in horizontaler Richtung und in vertikaler Richtung einen Winkelumfang von +0.57°/-10° für Lichtstärken von mindestens 250 cd aufweist und deren Lichtstärke zur Mitte, also zur optischen Achse hin, im Abblendlichtfall auf die maximal erlaubten 43750 cd ansteigt, ohne dass innerhalb der Lichtverteilung scharfe Helligkeitsunterschiede auftreten. Für Fernlicht (ohne Blende) gelten einfachere Forderungen ohne Hell-Dunkel-Grenze und mit höherem Maximum. Unter einer homogenen Lichtverteilung wird dabei eine Lichtverteilung verstanden, in der, abgesehen von äußeren Rändern, keine scharfen Helligkeitsunterschiede und keine chromatischen Aberrationen auftreten.

Diese Aufgabe wird mit den Merkmalen des Anspruchs 1 gelöst. Dabei unterscheidet sich die Erfindung vom Stand der Technik nach der WO 2015/058227 A1 durch die kennzeichnenden Merkmale des Anspruchs 1. Diese sehen vor, dass der Kraftfahrzeugscheinwerfer Mikroprojektoren aufweist, deren Breiten unterschiedlich sind und deren Höhen unterschiedlich sind.

Durch die unterschiedlichen Breiten und Höhen ergeben sich Mikroprojektoren mit unterschiedlich großen Querschnitten. Diese Querschnitte bilden die Eingangspupillen der Eingangslinsen. Als Folge werden Lichtbündel unterschiedlicher Breite und Höhe erzeugt, ohne dass dabei mehr Licht abgeschattet wird, als für die Erzeugung einer regelkonformen Standard-Hell-Dunkel-Grenze erforderlich ist. Engere Lichtverteilungskurven (d.h. ISO-Linien gleicher Intensität an einer Messwand) und damit einhergehend höheren Konzentrationen in einem Zentrum (hot spot) können mit Projektionsmodulen kleinerer Querschnitte erzeugt werden.

Bei gleicher Krümmung der optischen Flächen der Eingangslinsen besitzen die Lichtkegel-Querschnitte, die über die Austrittslinsen austreten, umso geringere Ausdehnungen, je kleiner die Eingangspupillen sind.

Anstatt mit Hilfe zusätzlich modifizierter Blenden die Lichtkegel-Querschnitte nicht nur zur Formung der vorgeschriebenen HDGs, sondern darüber hinaus zu beschneiden, werden Mikroprojektoren unterschiedlich großer Querschnitte vorgeschlagen. Die vorgeschlagenen Querschnitte sind die Eingangspupillen der Einkoppellinsen jedes einzelnen Projektors. Dadurch werden idealerweise keine extra Lichtanteile geblockt, außer denjenigen Lichtanteilen, die blockiert werden müssen, um die Standard-Hell-Dunkel-Grenze zu erzeugen. Verläufe, Ausläufe und Konzentrationen der Lichtverteilungen werden durch die Krümmungsverhältnisse an der Einkoppellinse und durch die Restdivergenz der Primäroptik, also durch den Öffnungswinkel des aus der Primäroptik austretenden Lichtbündels, beeinflusst.

Bei gleicher Krümmung der lichtbrechenden Flächen der Eingangslinse nimmt die Ausdehnung der quer zur optischen Achse liegenden Lichtbündelquerschnitte mit kleiner werdenden Eingangspupillen ab. Dann nehmen auch die Lichtkegel-Querschnitte ab, die von den Austrittslinsen auf die Straße projiziert werden. Als Folge besitzen die so auf der Straße erzeugten Lichtverteilungen Ausdehnungen, die durch die Breiten und Höhen der Mikroprojektoren und damit ohne Abschattung konstruktiv vorgegeben werden können.

Für engere Lichtverteilungskurven (ISO-Linien gleicher Intensität in der Lichtverteilung) und höhere Lichtstärken im Zentrum der Lichtverteilungen (hot spots) kann mit Projektionsmodulen kleinerer Querschnitte gesorgt werden.

Die kleineren Eingangspupillen bzw. Mikroprojektor-Querschnitte ermöglichen bei gleichem Bauraum eine größere Anzahl von Mikroprojektoren. Entsprechend ergibt sich auch eine größere Anzahl von engeren Teillichtverteilungen, die sich überlappen. Auf dieser Weise wird erreicht, dass die numerische Apertur eines jeden Mikroprojektors verkleinert wird, wodurch chromatische Aberrationen reduziert werden. Der ausgeleuchtete Öffnungswinkel wird kleiner und die gemittelte Lichtstärke im Scheinwerferbündel, bzw. die Beleuchtungsstärke auf der Straße, werden entsprechend der gesteigerten Anzahl von Mikroprojektoren vervielfacht.

Durch diese Lösung werden keine Lichtanteile unnötig extra geblockt. Die Lichtübertragungseffizienz bleibt im Prinzip erhalten, unabhängig davon, ob eine enge und intensive Lichtverteilung (hot spot) oder ob eine breitere Verteilung geringerer Intensität (wide spread) generiert wird. Die Lichtübertragungseffizienz ist dadurch, anders als bei der WO 2015/058227 A1, davon unabhängig, ob eine enge und intensive Lichtverteilung (hot spot) oder ob eine breitere Verteilung geringer Intensität (wide spread) generiert wird. Die Lichtübertragungseffizienz bleibt auf dem üblichen Niveau eines konventionellen Projektionsmoduls.

Dabei verwendet die Erfindung Mikroprojektoren, die eine Realisierung besonders kurzbauender Scheinwerfermodule mittels einer Vielzahl von matrixartig nebeneinander und übereinander angeordneten Mikroprojektoren erlauben.

Neben dem Vorteil der massiven Bauraumverkleinerung, ermöglicht dieser Ansatz das Erzeugen einer äußerst homogenen, farbneutralen Gesamt-Lichtverteilung mit scharfen Hell-Dunkel-Grenzen und wenig ausgeprägten chromatischen Aberrationen

Bevorzugt ist auch, dass Brennpunkte der Eingangslinse von wenigstens einem der Mikroprojektoren in einer Ausbreitungsrichtung des aus der Lichtquelle austretenden Lichtes hinter der Blende des wenigstens einen Mikroprojektors liegen. Dabei liegen die Brennpunkte der Eingangslinsen bevorzugt sowohl für die horizontale Richtung als auch für die vertikale Richtung in Richtung der abbildenden Linse stets hinter der als Hell-Dunkel-Grenze abgebildeten Blende.
Das ermöglicht eine flexiblere Formung der abzubildenden Lichtverteilung an der Position der als Hell-Dunkel-Grenze abzubildenden Kante der Blende und reduziert ein Übersprechen zu den abbildenden Linsen der benachbarten Mikroprojektoren.

Weiter ist bevorzugt, dass sich die Eingangslinsen von wenigstens zwei Mikroprojektoren in den Krümmungen ihrer Lichteintrittsflächen und/oder in den Krümmungen ihrer Lichtaustrittsflächen unterscheiden.

Dadurch ergibt sich ein weiter Gestaltungspielraum beim Entwurf des Lichtmoduls, weil Verläufe, Ausläufe und Konzentrationen der Lichtverteilungen durch die Krümmungsverhältnisse an der Einkoppellinse und der Restdivergenz der Primäroptik beeinflusst werden.

Eine weitere bevorzugte Ausgestaltung zeichnet sich dadurch aus, dass die Lichtaustrittsflächen der Ausgangslinsen von wenigstens zwei der Mikroprojektoren gleich stark gekrümmt sind.

Für die abbildenden Ausgangslinsen ergeben sich dann identische optische Grundflächen. Das führt dazu, dass die Ausgangslinsen die Blenden, bzw. die am Blendenort herrschende Lichtverteilung, idealerweise als gleichgroße Bilder auf die Straße abbilden.

Die Blenden könnten aber auch skaliert (unterschiedlich groß aber mit gleichen Proportionen) sein. In diesem Fall würden sich die Ausgangslinsen, ihre Grundflächen und Brennweiten so unterscheiden, dass über die Anpassung des Abbildungsmaßstabs gleichgroße Blenden-Bilder auf die Straße projiziert werden. Im Fernlichtfall fällt die Blende aus, die restlichen Voraussetzungen werden aufrechterhalten, so dass die lokale Lichtverteilung an der fehlenden Blendenposition über die Auskoppellinse auf die Straße projiziert wird.

Bevorzugt ist auch, dass der Kraftfahrzeugscheinwerfer erste Mikroprojektoren aufweist, die eine erste Breite und eine erste Höhe aufweisen, zweite Mikroprojektoren aufweist, die eine zweite Breite und eine zweite Höhe aufweisen, und dritte Mikroprojektoren aufweist, die eine dritte Breite und eine dritte Höhe aufweisen.

Ein solcher Scheinwerfer eignet sich dazu, verschiedene Teillichtverteilungen zu erzeugen, in denen die Helligkeit unterschiedlich breit verteilt ist, so dass sich durch Überlagerung Lichtverteilungen mit breiten Anteilen (wide spread) und mit weitreichenden Anteilen (hot spot) erzeugen lassen. Somit deckt die Gesamtlichtverteilung des Scheinwerfers den kompletten vorgeschriebenen Winkelbereich einer regelkonformen Lichtverteilung ab. Die Gesamtlichtverteilung wird durch die "Mischungsverhältnisse" der Mikroprojektor-Querschnitt-Typen definiert. Zu diesem Zweck kann der Scheinwerfer ein Hybridlichtmodul aufweisen, das verschiedene Typen von Mikroprojektoren aufweist, oder er kann mehrere Lichtmodule aufweisen, von denen jedes nur einen Typ von Mikroprojektoren aufweist, wobei die unterschiedlichen Lichtmodule unterschiedliche Typen von Mikroprojektoren aufweisen.

Eine weitere bevorzugte Ausgestaltung zeichnet sich dadurch aus, dass der Kraftfahrzeugscheinwerfer mehrere Lichtmodule aufweist, welche die Merkmale des Lichtmoduls aus dem Anspruch 1 aufweisen. Weiter ist bevorzugt, dass sich die Eingangslinsen von wenigstens zwei Mikroprojektoren in den Krümmungen ihrer Lichteintrittsflächen und/oder in den Krümmungen ihrer Lichtaustrittsflächen unterscheiden.

Eine weitere bevorzugte Ausgestaltung zeichnet sich dadurch aus, dass ein erstes Lichtmodul der mehreren Lichtmodule nur erste Mikroprojektoren aufweist, deren Breiten gleich sind und deren Höhen gleich sind, und dass ein zweites der mehreren Lichtmodule nur zweite Mikroprojektoren aufweist, deren Breiten gleich sind und deren Höhen gleich sind, wobei sich die Breiten der ersten Mikroprojektoren von den Breiten der zweiten Mikroprojektoren unterscheiden und sich die Höhen der ersten Mikroprojektoren von den Höhen der zweiten Mikroprojektoren unterscheiden.

Weiter ist bevorzugt, dass ein Lichtmodul Mikroprojektoren aufweist, deren Breiten unterschiedlich sind und deren Höhen unterschiedlich sind.

Ein solches Hybridlichtmodul eignet sich dazu, mit nur einer Lichtquelle und einer Primäroptik verschiedene Teillichtverteilungen zu erzeugen, in denen die Helligkeit unterschiedlich breit verteilt ist, so dass sich durch Überlagerung Lichtverteilungen mit breiten Anteilen (wide spread) und mit weitreichenden Anteilen (hot spot) erzeugen lassen. Somit deckt die Gesamtlichtverteilung eines solchen Hybridlichtmoduls den kompletten vorgeschriebenen Winkelbereich einer regelkonformen Lichtverteilung ab. Die Gesamtlichtverteilung wird durch die "Mischungsverhältnisse" der Mikroprojektor-Querschnitt-Typen definiert und kann über die Bestromung der Lichtquelle feinstufig bzw. stufenlos gedimmt werden. Ihre Kontrastverhältnisse bleiben dabei idealerweise erhalten.

Bevorzugt ist auch, dass eine Summe der Breiten von nebeneinander angeordneten Mikroprojektoren eines Lichtmoduls kleiner als 30 mm ist und dass eine Summe der Höhen übereinander angeordneter Mikroprojektoren eines Lichtmoduls kleiner als 30 mm ist.

Eine weitere bevorzugte Ausgestaltung zeichnet sich dadurch aus, dass die Breiten der Mikroprojektoren kleiner als 6 mm sind, die Höhen der Mikroprojektoren kleiner als 4 mm sind und die Tiefe jeweils einer Linse der Mikroprojektoren kleiner als 6 mm ist.

Bevorzugt ist auch, dass der Kraftfahrzeugscheinwerfer mehrere Lichtmodule aufweist, welche die in dem Anspruch 1 genannten Merkmale aufweisen, wobei die lichtsammelnden Primäroptiken von wenigstens zwei der Lichtmodule das in sie eintretende Licht unterschiedlich stark bündeln.

Mit dieser Ausgestaltung lässt sich die Lichtverteilung zusätzlich beeinflussen.

Weitere Vorteile ergeben sich aus den abhängigen Ansprüchen, der Beschreibung und den beigefügten Figuren.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in den Zeichnungen dargestellt und werden in der nachfolgenden Beschreibung näher erläutert. Dabei bezeichnen gleiche Bezugszeichen in verschiedenen Figuren jeweils gleiche oder zumindest ihrer Funktion nach vergleichbare Elemente. Es zeigen, jeweils in schematischer Form:
- Figur 1: eine Überlagerung von drei Fernlichtverteilungen;
- Figur 2: dazu korrespondierende Abblendlichtverteilungen;
- Figur 3: ein Ausführungsbeispiel eines erfindungsgemäßen Kraftfahrzeugscheinwerfers;
- Figur 4: Mikroprojektoren in einer perspektivischen Darstellung;
- Figur 5: einen horizontalen Schnitt eines einzelnen ersten (hot spot) Mikroprojektors;
- Figur 6: einen horizontalen Schnitt einer Zeile von ersten Mikroprojektoren zusammen mit idealisierten Lichtbündelverläufen;
- Figur 7: zeigt ISO-Linien gleicher Intensität in einer von mehreren ersten Mikroprojektoren erzeugten hot spot Abblendlichtverteilung.
- Figur 8: einen horizontalen Schnitt eines einzelnen zweiten (wide spread) Mikroprojektors;
- Figur 9: einen horizontalen Schnitt einer Zeile von zweiten Mikroprojektoren zusammen mit idealisierten Lichtbündelverläufen;
- Figur 10: ISO-Linien gleicher Intensität in einer von mehreren zweiten Mikroprojektoren erzeugten wide spread Abblendlichtverteilung;
- Figur 11: einen horizontalen Schnitt eines einzelnen dritten (extra wide spread) Mikroprojektors;
- Figur 12: einen horizontalen Schnitt einer Zeile von dritten Mikroprojektoren zusammen mit idealisierten Lichtbündelverläufen;
- Figur 13: ISO-Linien gleicher Intensität in einer von mehreren dritten Mikroprojektoren erzeugten extra wide spread Abblendlichtverteilung.
- Figur 14: verschiedene Lichtmodule und ein Ensemble dieser Lichtmodule; und
- Figur 15: ein Hybridlichtmodul, das Mikroprojektoren aufweist, deren Breiten unterschiedlich sind und deren Höhen unterschiedlich sind.

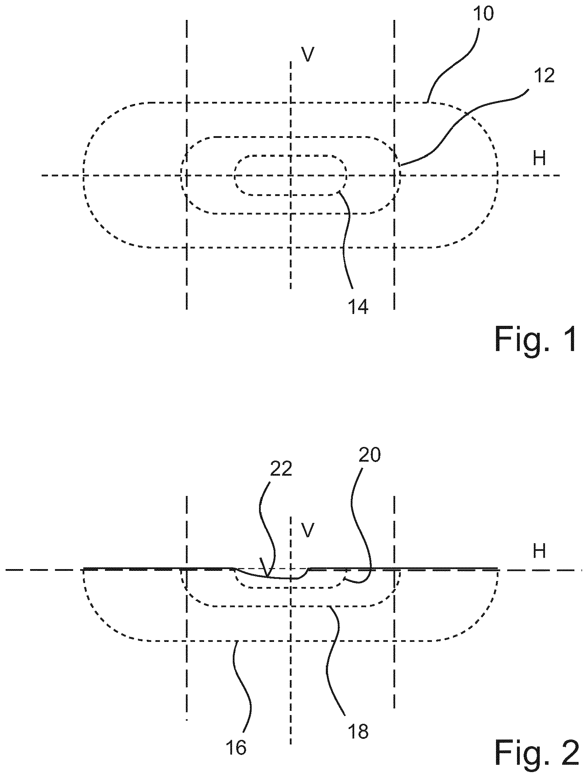

Figur 1 zeigt im Einzelnen rein qualitativ eine Überlagerung von drei Fernlichtverteilungen 10, 12, 14, wie sie sich auf einem senkrecht vor einem Scheinwerfer stehenden Schirm einstellen, zusammen mit der Angabe einer vertikalen Richtung V und der Angabe eine horizontalen Richtung H. Die breiteste der drei Lichtverteilungen wird im Folgenden auch als extra wide spread Fernlichtverteilung 10 bezeichnet. Die nächstschmalere Fernlichtverteilung wird im Folgenden auch als wide spread Fernlichtverteilung 12, und die schmalste der drei Lichtverteilungen wird im Folgenden auch als hot spot Lichtverteilung 14 bezeichnet.

Figur 2 zeigt dazu korrespondierende Abblendlichtverteilungen 16, 18, 20 mit einer für alle drei Abblendlichtverteilungen 16, 18, 20 im Überlagerungsbereich deckungsgleichen Hell-Dunkel-Grenze 22. Die breiteste der drei Lichtverteilungen wird im Folgenden auch als extra wide spread Abblendlichtverteilung 16 bezeichnet. Die nächstschmalere Lichtverteilung wird im Folgenden auch als wide spread Abblendlichtverteilung 18, und die schmalste der drei Lichtverteilungen wird im Folgenden auch als hot spot Abblendlichtverteilung 20 bezeichnet.

Figur 3 zeigt ein Ausführungsbeispiel eines erfindungsgemäßen Kraftfahrzeugscheinwerfers 24, in einem seitlichen Schnitt. Bei einer bestimmungsgemäßen Verwendung des Scheinwerfers 24 in einem Kraftfahrzeug wird die Schnittebene von der Richtung 26 einer Längsachse und der Richtung 28 einer Hochachse des Kraftfahrzeugs aufgespannt. Die Richtung 30 einer Querachse des Kraftfahrzeugs steht senkrecht auf der Schnittebene. Der Scheinwerfer 24 weist ein Lichtmodul 30 auf, das eine Lichtquelle 32, eine Licht 34 der Lichtquelle 32 sammelnde und parallelisierende Primäroptik 36 und eine Mehrzahl von Mikroprojektoren 38 aufweist. Die Lichtquelle 32 ist eine Halbleiterlichtquelle, bevorzugt eine Leuchtdiode oder Laserdiode, oder ein mehrere solcher Dioden aufweisendes array. Das Lichtmodul ist in einem Gehäuse 24.1 des Scheinwerfers 24 angeordnet. Eine Lichtaustrittsöffnung des Scheinwerfers wird von einer transparenten Abdeckscheibe 24.2 abgedeckt.

Die Mikroprojektoren 38 unterscheiden sich zum Teil in ihrer parallel zur Richtung der Hochachse 28 in Figur 1 liegenden Höhe. Erste Mikroprojektoren weisen eine kleine Höhe h1 auf. Diese Mikroprojektoren dienen zur Erzeugung einer hot spot Lichtverteilung. Zweite Mikroprojektoren weisen eine mittlere Höhe h2 auf. Diese Mikroprojektoren dienen zur Erzeugung einer wide spread Lichtverteilung. Dritte Mikroprojektoren weisen eine große Höhe h3 auf. Diese Mikroprojektoren dienen zur Erzeugung einer extra wide spread Lichtverteilung. Die Begriffe klein, mittel und groß werden hier zur qualitativen Unterscheidung der drei verschieden hohen Mikroprojektoren verwendet und sind daher nicht als auf bestimmte Werte quantitativ beschränkt zu verstehen.

Jeder Mikroprojektor 38 weist eine Eingangslinse 40, eine Blende 42 (gilt für Abblendlichtmikroprojektoren) und eine Ausgangslinse 44 auf. Die Stirnseiten der Ein- und Auskoppelflächen haben dieselben Abstände von der Blendenfläche, sowohl für hot spot als auch für wide spread und extra wide spread Mikroprojektoren. Daraus ergibt sich, dass auch die Vergrößerungsfaktoren dieser Mikroprojektoren gleich sind. Die Mikroprojektoren erzeugen damit ungleich große Bilder im Fernfeld. Eine Helligkeitsverteilung im Fernfeld ergibt sich durch die Überlagerung verschieden großer Bilder. Wenn die Abstände nicht gleich, sondern verschieden wären, würde dies Skalierungen der Blenden erfordern. Größere Abstände vergrößern die Brennweite und verkleinern den Öffnungswinkel des Austrittslichtkegels.

Bei der Erfindung werden verschieden große Lichtbündelquerschnitte, die in das Fernfeld abgebildet werden, nur durch verschiedene Größen der Eingangspupillen der Mikroprojektoren erzeugt. Die Blenden 42 dienen lediglich zur Formung der Hell-Dunkel-Grenze. Schmale Lichtverteilungen im Fernfeld werden durch enge Eingangspupillen erzeugt (z.B. hot spot). Hohe Intensitäten werden durch Überlagerung vieler schmaler Lichtverteilungen erzeugt, also durch Überlagerung der Beiträge von vergleichsweise vielen Mikroprojektoren erzeugt. Breite Lichtverteilungen im Fernfeld werden durch weite Eingangspupillen erzeugt (z.B. wide spread, extra wide spread). Niedrige Intensitäten werden durch Überlagerung der Beiträge von weniger Mikroprojektoren erzeugt.

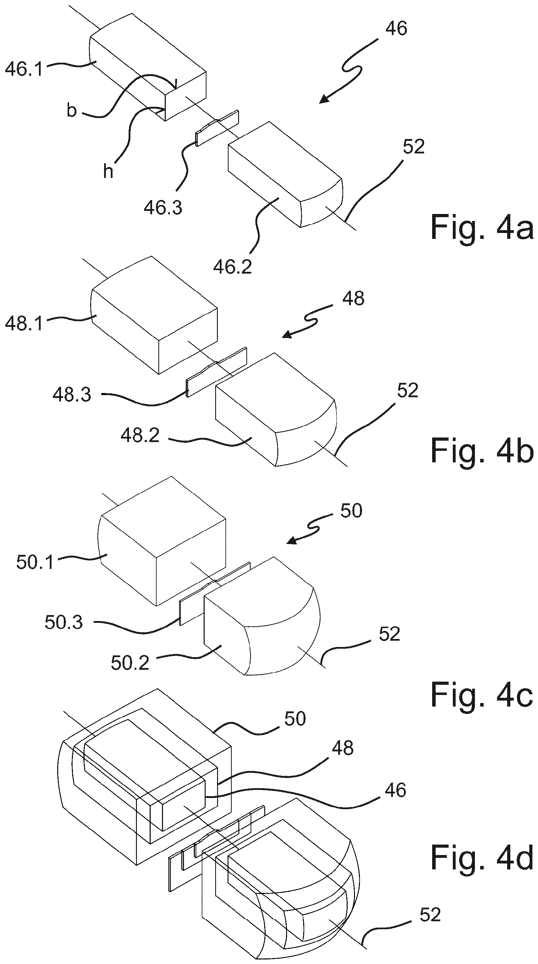

Figur 4 zeigt die Mikroprojektoren jeweils in einer perspektivischen Darstellung in gleichem Maßstab und in einer für einen Größenvergleich gedanklichen Überlagerung. Dabei zeigt Figur 4a einen ersten Mikroprojektor 46, Figur 4b einen zweiten Mikroprojektor 48, Figur 4c einen dritten Mikroprojektor 50, und Figur 4d zeigt die gedankliche Überlagerung der drei Mikroprojektoren 46, 48, 50. Jede der Figuren 4a bis 4d zeigt auch eine optische Achse 52. Die optische Achse 52 besitzt bei bestimmungsgemäßer Verwendung des Scheinwerfers die Richtung der Längsachse des Kraftfahrzeugs.

Jeder der Mikroprojektoren weist eine Eingangslinse 46.1, 48.1, 50.1, eine Ausgangslinse 46.2, 48.2, 50.2 und eine zwischen der Eingangslinse und der Ausgangslinse angeordnete Blende 46.3, 48.3, 50.3 auf. Die Eingangslinsen und die Blenden besitzen jeweils eine sich bei der bestimmungsgemäßen Verwendung des Kraftfahrzeugscheinwerfers 10 parallel zu einer horizontalen Richtung erstreckende Breite b und eine sich parallel zu der vertikalen Richtung erstreckende Höhe h.

Dies gilt analog für die Ausgangslinsen. Jede Ausgangslinse eines Mikroprojektors weist bevorzugt dieselbe Breite b und dieselbe Höhe h auf wie die zugehörige Eingangslinse des Mikroprojektors. Die Primäroptik und die Eingangslinse, Blende und Ausgangslinse jeweils eines Mikroprojektors sind so angeordnet, dass aus der Primäroptik austretendes Licht der Lichtquelle die Eingangslinse beleuchtet und aus der Eingangslinse austretendes Licht der Lichtquelle die Ausgangslinse beleuchtet. Die Mikroprojektoren zeichnen sich dadurch aus, dass ihre Breiten unterschiedlich sind und ihre Höhen unterschiedlich sind.

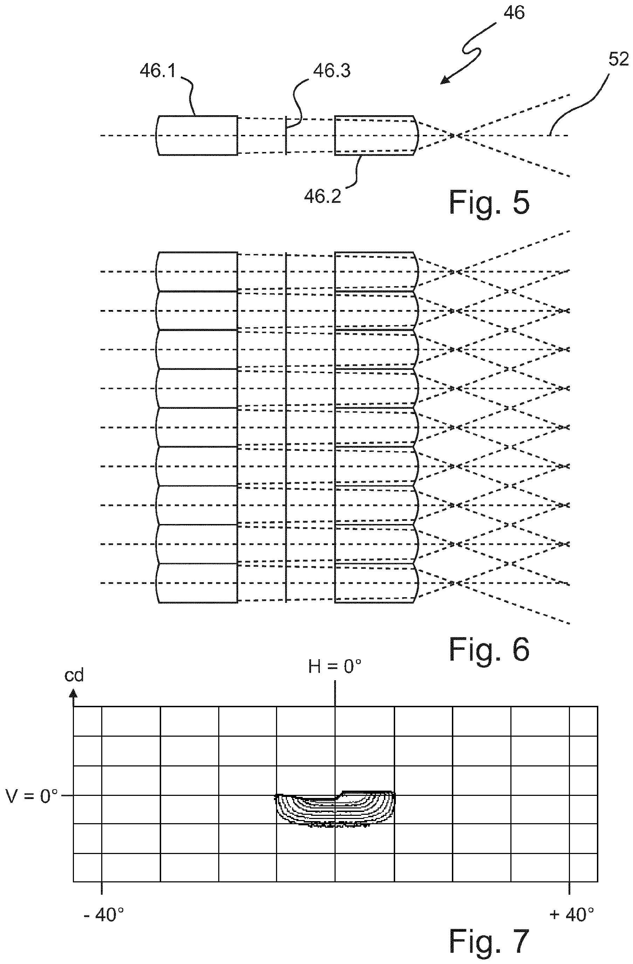

Figur 5 zeigt einen horizontalen Schnitt eines einzelnen ersten (hot spot) Mikroprojektors 46 und Figur 6 zeigt einen horizontalen Schnitt einer Zeile von ersten Mikroprojektoren 46 zusammen mit idealisierten Lichtbündelverläufen. Figur 7 zeigt ISO-Linien gleicher Intensität in einer von mehreren ersten Mikroprojektoren erzeugten hot spot Abblendlichtverteilung. Diese zeichnet sich durch eine nach oben scharfe Hell-Dunkel-Grenze und einen zu den Seiten sanften Auslauf mit allmählichem Absinken der Helligkeit aus. An der rechten Abscisse sind Beispiele von Lichtstärken in candela (cd) angegeben.

Dank ihrer kleinen Abmessungen liegen die örtlichen Verschiebungen in der Überlappung zu einer gemeinsamen Lichtverteilungskurve auf der Straße in der Größenordnung der einzelnen Mikroprojektor-Abmessungen. Diese liegen also im Millimeterbereich und sind deutlich kleiner als die örtliche Querschnittsausdehnung ihrer Lichtkegel auf der Straße. Eine solch geringe örtliche Verschiebung übt nahezu keinen Einfluss auf die Schärfe der Hell-Dunkel-Grenze aus und trägt höchstens zur besseren Farbdurchmischung, bzw. Homogenisierung der gemeinsamen Lichtverteilungskurve bei.

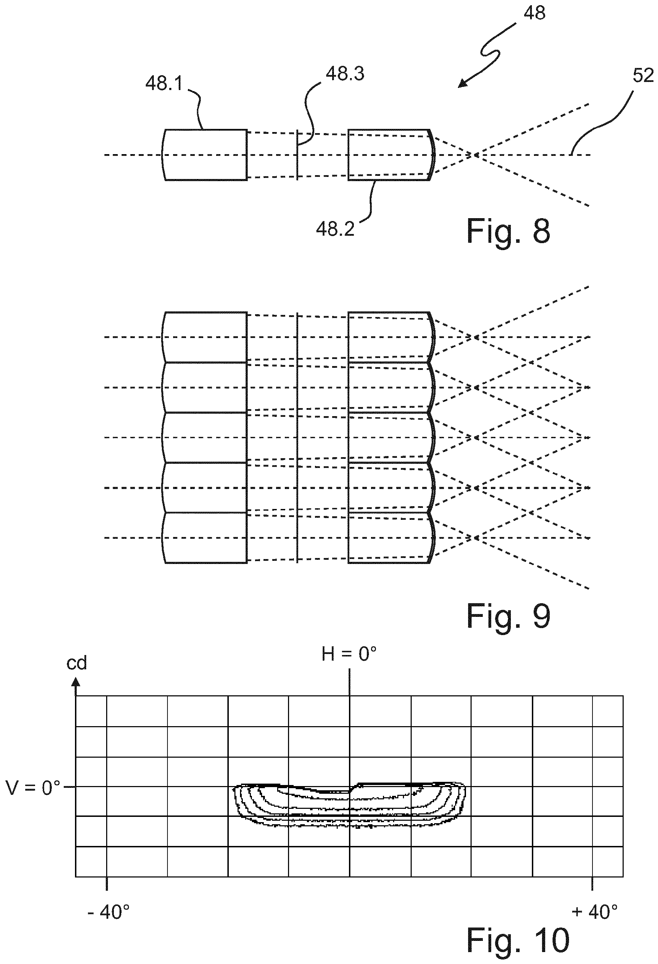

Figur 8 zeigt einen horizontalen Schnitt eines einzelnen zweiten (wide spread) Mikroprojektors 48 und Figur 9 zeigt einen horizontalen Schnitt einer Zeile von zweiten Mikroprojektoren zusammen mit idealisierten Lichtbündelverläufen.

Figur 10 zeigt ISO-Linien gleicher Intensität in einer von mehreren zweiten Mikroprojektoren erzeugten wide spread Abblendlichtverteilung. Diese zeichnet sich durch eine nach oben scharfe Hell-Dunkel-Grenze und einen zu den Seiten sanften Auslauf mit allmählichem Absinken der Helligkeit aus. An der rechten Abscisse sind Beispiele von Lichtstärken in candela (cd) angegeben.

Das größere Querschnittsprofil (Eingangspupille) ist verantwortlich für die Abdeckung eines größeren Auskoppelwinkels. Die Anzahl der wide spread Mikroprojektoren ist im Vergleich zur Anzahl von hot spot Mikroprojektoren bei vergleichbarem Bauraum kleiner. Daher sind die Blendenprojektionen auf der Straße vom Verlauf der Hell-Dunkel-Grenzen her zwar identisch, insgesamt jedoch in ihrer horizontalen und vertikalen Ausdehnung breiter und folglich blasser (geringere Lichtstärke). Die von den wide spread Mikroprojektoren erzeugte Lichtverteilung besitzt also ein quantitativ vergleichsweise schwächeres Maximum an der gleichen Stelle, an der auch das Maximum der hot spot Lichtverteilung liegt. Zu den Seiten hin ergibt sich auch hier ein sanfter Auslauf.

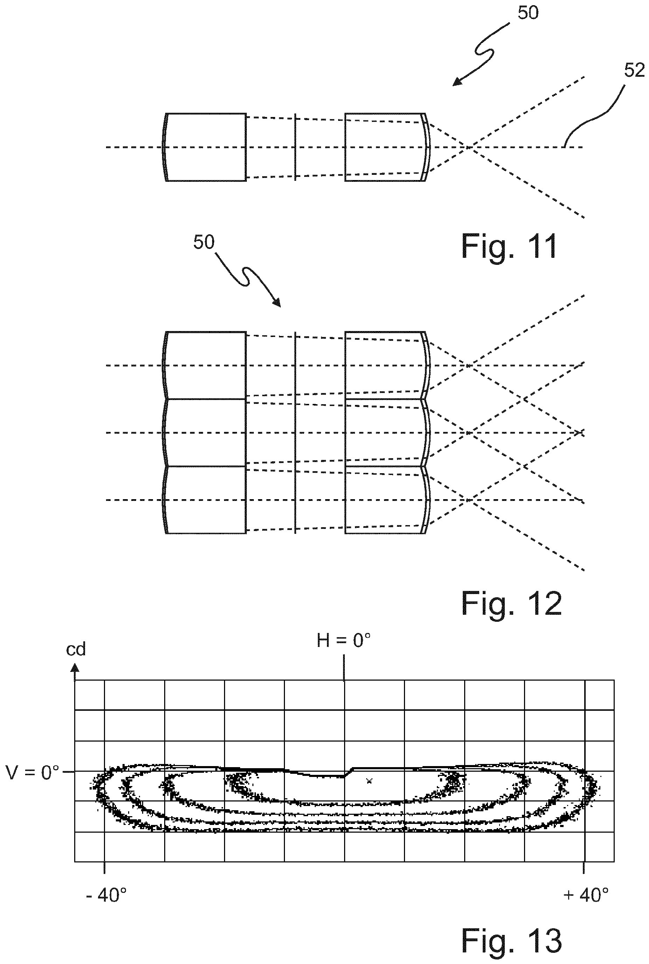

Figur 11 zeigt einen horizontalen Schnitt eines einzelnen dritten (extra wide spread) Mikroprojektors 50 und Figur 12 zeigt einen horizontalen Schnitt einer Zeile von dritten Mikroprojektoren 50 zusammen mit idealisierten Lichtbündelverläufen.

Figur 13 zeigt ISO-Linien gleicher Intensität in einer von mehreren dritten Mikroprojektoren erzeugten extra wide spread Abblendlichtverteilung. Diese zeichnet sich durch eine nach oben scharfe Hell-Dunkel-Grenze und einen zu den Seiten sanften Auslauf mit allmählichem Absinken der Helligkeit aus. An der rechten Abscisse sind Beispiele von Lichtstärken in candela (cd) angegeben. Auch hier gilt, dass die Hell-Dunkel-Grenzen der hot spot, wide spread und extra wide spread Lichtverteilungen im Bereich ihrer Überlagerung einen identischen Verlauf besitzen. Die jeweiligen Blendenkanten werden, möglicherweise auch unterschiedlich vergrößert, als gleich große Abbildungen projiziert, auch wenn durch verschieden enge Strahlengänge verschieden breite Lichtverteilungen und Hell-Dunkel-grenzen erzeugt werden. Bei gleicher Brennweite der abbildenden Mikrolinsen sind auch die Blendenkanten in gleichem Maßstab ausgebildet (skaliert), bzw. alle Mikroprojektoren haben identische Abbildungsmaßstäbe.

In einem Ausführungsbeispiel weisen die optischen Komponenten der Mikroprojektoren folgende Breiten B, Höhen H und Tiefen T und weitere Abmessungen auf:

| | |
|---|---|
| Hot spot-Linsen: | 2,3mm x 1,4mm x 5,0mm (B x H x T) |
| Wide spread-Linsen: | 3,6mm x 2,1mm x 5,0mm (B x H x T) |
| extra wide spread | |
| Linsen: | 5,0mm x 3,6mm x 5,0 mm (B x H x T) |
| Linsenabstand: | 4,0mm |
| Blendendicke: | 0,1mm, mittig zwischen |

Eingangslinse und Ausgangslinse platziert Brennweite der Eingangslinsen: » 7,0mm
Form der optischen Flächen der Eingangslinsen: (bikonisch, torisch, freiform)
Brennweite der Ausgangslinsen: ca. 7,0mm
Form der optischen Flächen der Ausgangslinsen: (sphärisch, asphärisch)

Die optischen Achsen der abbildenden Mikroprojektorlinsen (sphärisch, asphärisch) bestimmen die optischen Achsen der jeweiligen Mikroprojektoren und sind parallel oder nahezu parallel zueinander angeordnet. Je schmäler einzelne Mikroprojektoren sind, desto geringer sind die Öffnungswinkel einzelner Mikrobündel trotz kurzer Brennweiten. Das gilt insbesondere für die hot spot-Mikroprojektoren. Dadurch tritt weniger Farbdispersion an den Linsenrändern auf.

Wie aus den Figuren 5, 8 und 11 ersichtlich ist, liegen die Brennpunkte der Eingangslinse der Mikroprojektoren lichtstromabwärts der Blende des jeweiligen Mikroprojektors.

Die Lichtaustrittsflächen der Ausgangslinsen der Mikroprojektoren sind bevorzugt gleich stark gekrümmt.

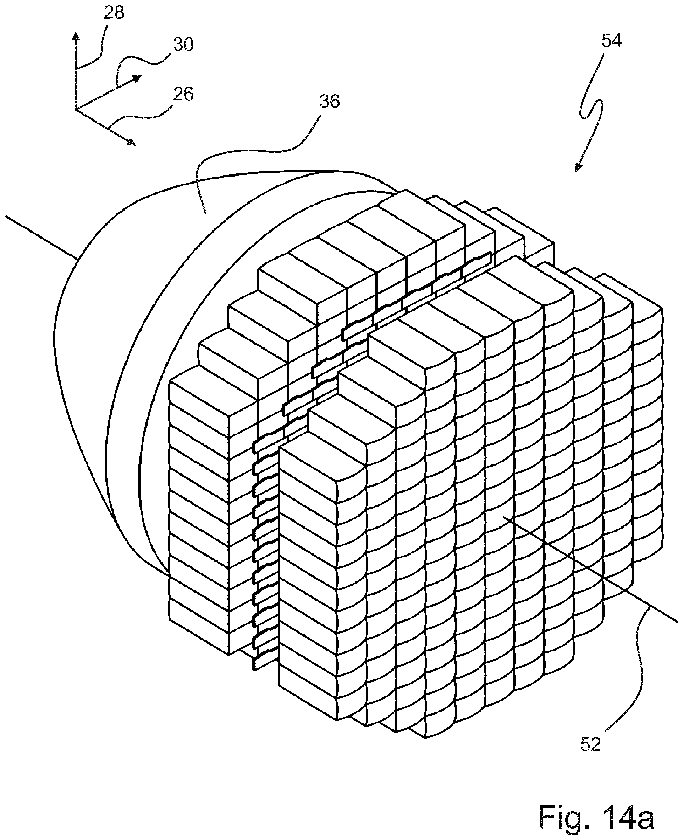

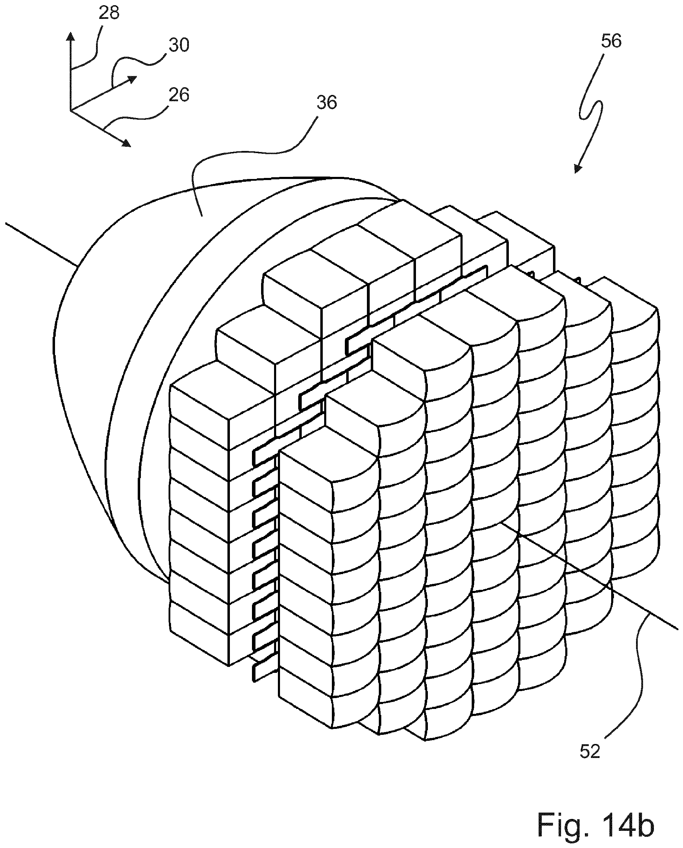

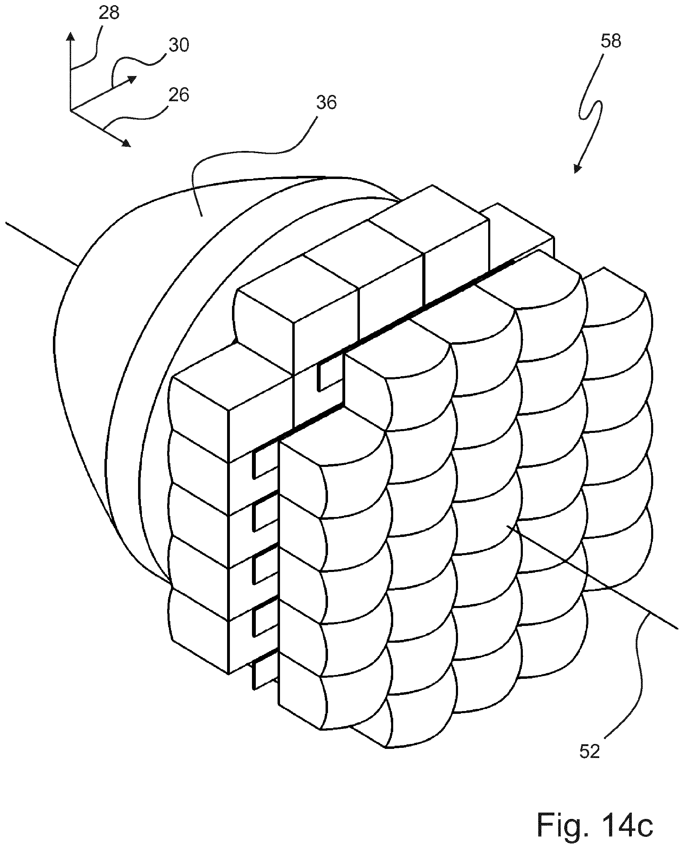

Figur 14a zeigt ein erstes Lichtmodul 54, das nur erste Mikroprojektoren aufweist. Figur 14b zeigt ein zweites Lichtmodul 56, das nur zweite Mikroprojektoren aufweist und Figur 14c zeigt ein drittes Lichtmodul 58, das nur dritte Mikroprojektoren aufweist.

Das erste Lichtmodul 54 weist nur erste Mikroprojektoren auf, deren erste Breiten gleich sind und deren erste Höhen gleich sind. Das zweite Lichtmodul 56 weist nur zweite Mikroprojektoren auf, deren zweite Breiten gleich sind und deren zweite Höhen gleich sind. Das dritte Lichtmodul 58 weist nur dritte Mikroprojektoren auf, deren dritte Breiten gleich sind und deren dritte Höhen gleich sind. Die Höhen liegen jeweils parallel zur Hochachse 28. Die Breiten liegen jeweils parallel zur Querachse 30.

Die ersten Breiten der ersten Mikroprojektoren unterscheiden sich von den zweiten Breiten der zweiten Mikroprojektoren und den dritten Breiten der dritten Mikroprojektoren. Die ersten Höhen der ersten Mikroprojektoren unterscheiden sich von den zweiten Höhen der zweiten Mikroprojektoren und den dritten Höhen der dritten Mikroprojektoren.

Es entstehen auf diese Weise z.B. drei Modul-Typen: hot spot, wide spread und extra wide spread. Jedes Modul besteht aus einer kollimierenden Primäroptik, einem Eingangslinsen-Array, einem Blenden-Array und einem Ausgangslinsen-Array.

Jeder Modultyp hat beispielsweise die Maße von z.B. 25mm x 25mm x 30mm (Höhe H x Breite B x Tiefe T). Charakteristisch ist, dass die Mikroprojektor-Querschnitte für hot spot, wide spread und extra wide spread unterschiedlich groß sind. Die höhere Lichtstärke im hot spot wird mit Mikroprojektoren erzeugt, deren Querschnitte kleiner als die Querschnitte der wide spread-Mikroprojektoren sind. Die Querschnitte der wide spread-Mikroprojektoren sind kleiner als die Querschnitte der extra wide spread-Mikroprojektoren. Die Abbildungsqualität ist nahe der gemeinsamen optischen Achse 52 bis etwa +/-10° seitlich davon am höchsten. Ab etwa +/-10° nimmt die Abbildungsqualität, bedingt durch den einfachen Aufbau der Projektoren, gezwungenermaßen ab.

Durch die gute Abbildungsqualität ergeben sich bei entsprechender Justage der einzelnen Module zueinander homogene, nahtlose Überlappungen der Lichtverteilungen, so dass die aus der Überlagerung resultierende Gesamtlichtverteilung als eine insgesamt homogene und farbkompensierte Lichtverteilung wahrgenommen werden kann. Zwischen den einzelnen Teillichtverteilungen treten keine sprunghaften Helligkeitsunterschiede auf.

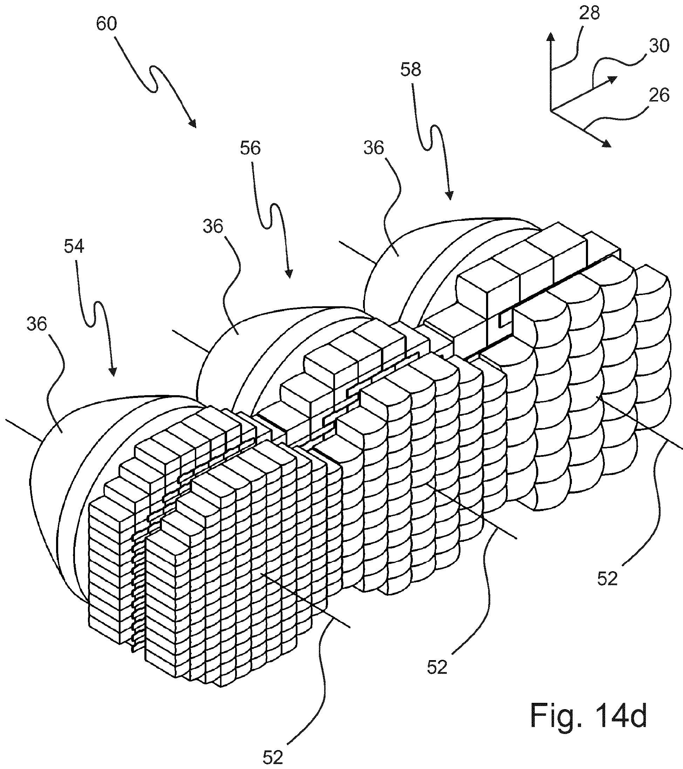

Figur 14d zeigt ein Ensemble 60 eines solchen ersten Lichtmoduls 54, eines solchen zweiten Lichtmoduls 56 und eines solchen dritten Lichtmoduls 58. Die drei Lichtmodule werden bevorzugt gemeinsam in einem Scheinwerfer verwendet, um zum Beispiel eine Abblendlichtverteilung zu bilden, die sich aus einem hot spot Anteil, einem wide spread Anteil und einem extra wide spread Anteil zusammensetzt.

Gemäß der Erfindung zeichnet sich der Kraftfahrzeugscheinwerfer dadurch aus, dass er Mikroprojektoren aufweist, deren Breiten unterschiedlich sind und deren Höhen unterschiedlich sind.

Eine Überlagerung von mehreren Teillichtverteilungen, die mit Mikroprojektoren unterschiedlicher Querschnitte erzeugt werden, kann auch mit einem einzigen Lichtmodultyp verwirklicht werden.

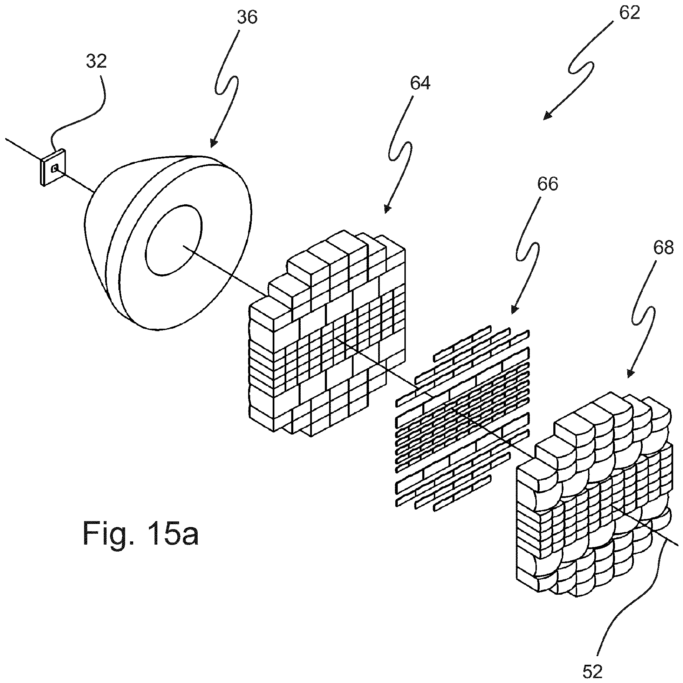

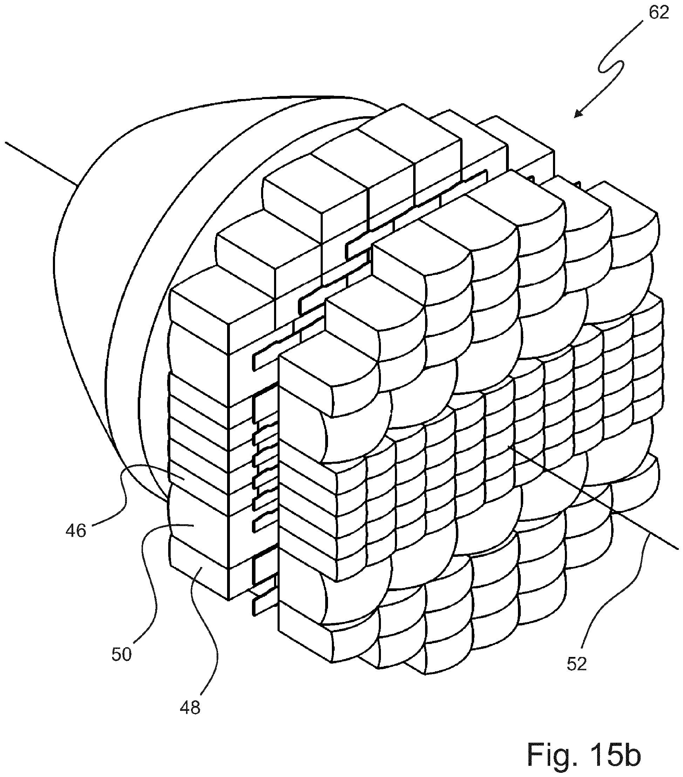

Die Figuren 15a und 15b zeigen ein Lichtmodul 62, das Mikroprojektoren aufweist, deren Breiten unterschiedlich sind und deren Höhen unterschiedlich sind. Dabei zeigt die Figur 15a eine längs der optischen Achse 52 auseinander gezogene Darstellung, in der Lichtquelle 32, Primäroptik 36, Eingangslinsenarray 64, Blendenarray 66 und Ausgangslinsenarray 68 voneinander getrennt deutlich erkennbar sind. Figur 15b zeigt das Lichtmodul 62 in einem funktionsfähigen Montagezustand. Fig. 15b zeigt besonders deutlich, dass Mikroprojektoren 46, 48, 50 unterschiedlicher Querschnitte vorhanden sind.

Die Figuren 15a, 15 zeigen ein Beispiel dafür, wie zeilen- oder spaltenweise, oder nach einem anderen Muster verteilte verschiedene Mikroprojektor-Typen 46, 48, 50 in einem hybriden Mikroprojektor-Array zusammengefasst werden, wobei der Begriff "Hybrid" in dieser Anmeldung die Verwendung von Mikroprojektoren mit unterschiedlichen Querschnitten in Verbindung mit einer gemeinsamen kollimierenden Primäroptik 36 und Lichtquelle 32 umschreibt. Durch die Verwendung von Hybridlichtmodulen 62 ist es möglich, verschiedene Kombinationen aus hot spot, wide spread und extra wide spread Mikroprojektoren zusammenzustellen. So können die verschiedenen Anteile in der Gesamtlichtverteilung unterschiedlich stark betont werden, so dass zum Beispiel eine Gesamtlichtverteilung mit einem ausgeprägten Maximum oder mit größerem oder kleinerem horizontalen und/oder vertikalen Öffnungswinkel erzeugt werden. Unterschiedliche Zeilen- oder Spaltenkombinationen, sogar Mischzeilen sind denkbar. Die Mikroprojektoren können beliebig zueinander platziert werden (bevorzugt parallel oder nahezu parallel), so dass der volle Querschnitt des von der Primäroptik kollimierten Lichtbündels der Lichtquelle genutzt wird.

Über die bei der Konstruktion separat festlegbaren Werte der Höhen und Breiten der einzelnen Mikroprojektoren ist es möglich, die Anteile der daraus resultierenden Teillichtverteilungen in der Überlagerung der einzelnen Teillichtverteilungen zu steuern, so dass sich in der Überlagerung ein erwünschter Verlauf der Lichtstärke in horizontaler und in vertikaler Richtung ergibt.

In einer bevorzugten Ausgestaltung werden in einem Scheinwerfer mehrere solcher Hybridlichtmodule verwendet, wobei jedes Hybridlichtmodul eine vollständige, skalierte Lichtverteilung erzeugt (skaliert: unterschiedlich groß, aber mit gleichen Proportionen). Somit ist es möglich, mit beispielsweise zwei bis drei gleichen Hybridlichtmodulen die erforderliche Lichtverteilung über eine passende Bestromung der Lichtquellen zu generieren.

Bei den Hybridlichtmodulen 62 werden Mikroprojektoren verschieden großer Querschnitte in einem einzelnen Mikroprojektor-Modul 62 zusammengefasst, so dass einer Lichtquelle 32 bzw. einem Kollimator 36 sowohl hot spot, wide spread und extra wide spread-Mikroprojektorarrays zugeordnet werden. Somit deckt die Gesamtlichtverteilung eines solchen Moduls 62 den kompletten vorgeschriebenen Winkelbereich ab. Die Gesamtlichtverteilung wird durch die "Mischungsverhältnisse" der Mikroprojektor-Querschnitt-Typen definiert und kann über die Bestromung der Lichtquelle feinstufig bzw. stufenlos gedimmt werden. Ihre Kontrastverhältnisse bleiben dabei idealerweise erhalten.

Die kollimierende Primäroptik 36 weist in der Praxis eine Restdivergenz auf. Das von der Primäroptik ausgehende Licht der Lichtquelle ist daher nicht vollständig parallel, sondern es weist einen Öffnungswinkel von wenigen Grad auf. Der Querschnitt des kollimierten bzw. gebündelten Lichtstromes weist örtlich unterschiedliche Lichtstärken auf. Das führt dazu, dass, je nachdem, an welcher Position sich ein Mikroprojektor im Kollimator-Lichtbündel befindet, er das geometrisch gleiche Hell-Dunkel-Grenzen-Bild auf die Straße projiziert, jedoch unterschiedlich ausgeleuchtet. Jede Abbildung hat eventuell einen anderen Lichtschwerpunkt oder ist sogar nur teilweise ausgeleuchtet. Entsprechend des Superpositionsprinzips ergibt sich die Gesamtlichtverteilung als Summe der Einzelbilder. Es gilt, dass sich durch die Überlagerung der Einzelbilder dispersionsbedingte Farbeffekte in ihrer Gesamtheit aufheben.

In der Produktion kann das vorgeschlagene Hybridlichtmodul zu einer Vereinfachung und zu höheren Stückzahlen führen. Nur ein Modultyp wäre erforderlich, statt verschiedene Module für hot spot, wide spread und extra wide spread-Teillichtverteilungen entwickeln und in kleinerer Anzahl herstellen zu müssen.

Die Abmessungen der aktiven Optik eines Hybridlichtmoduls liegen beispielsweise bei ca. 25mm x 25mm (Höhe x Breite) und bei einer Bautiefe von ca. 30mm. Angenommen, drei Module würden zur Erzeugung einer Abblendlichtverteilung erforderlich sein, ergäben sich beispielsweise 25mm x 75mm x 30mm (Höhe x Breite x Tiefe). Verglichen mit den Abmessungen eines konventionellen Projektionsmoduls von ca. 75mm x 75mm x 120mm (Höhe x Breite x Tiefe) ergibt sich eine Volumenverkleinerung in der Größenordnung eines Faktors 1/12.

Das Potenzial dieser Technologie ist damit bei Weitem nicht erschöpft. Denkbar ist es, solche Hybridlichtmodule zweifach linear zu skalieren, was einem weiteren Volumenskalierungsfaktor von 1/8 entspricht. Dadurch wären Volumen-Skalierungen von 1/(12 x 8) = 1/96 bezogen auf ein konventionelles Projektionssystem möglich. Selbstverständlich werden auch andere Faktoren wie Wärme, Kühlung, LED-Lichtfluss, Steuer-Elektronik und Herstellbarkeit die Skalierung beeinflussen bzw. ihr entgegenwirken. Dennoch eröffnet die vorliegende Erfindung neue Möglichkeiten der Miniaturisierung, für lichttechnische Innovation und Qualitätssteigerung, zur Umsetzung moderner Design-Ideen für neue Akzente in der Wahrnehmung, sowie zur Kostenreduktion und Wertsteigerung kommender Scheinwerfergenerationen.

Die Erfindung ermöglicht eine beeindruckende Bauraumeinsparung (Verkleinerung bis ca. 1/100 denkbar) und erzeugt eine extrem homogene Gesamtlichtverteilung mit einer scharfen Hell-Dunkel-Grenze. Durch die Modularität und die sehr gute Herstellbarkeit und robuste Funktionsweise ergibt sich der Vorteil niedrig zu erwartender Produktionskosten.

## Patentansprüche

1. Kraftfahrzeugscheinwerfer (24) mit einem Lichtmodul (30), das eine Lichtquelle (32), eine Licht (34) der Lichtquelle (32) sammelnde Primäroptik (36) und eine Mehrzahl von Mikroprojektoren (38) aufweist, von denen jeder jeweils eine Eingangslinse (40), eine Ausgangslinse (44) und eine zwischen der Eingangslinse und der Ausgangslinse angeordnete Blende (42) aufweist, wobei die Eingangslinse (40), die Blende (42) und die Ausgangslinse (44) eine sich bei bestimmungsgemäßer Verwendung des Kraftfahrzeugscheinwerfers (24) parallel zu einer horizontalen Richtung (30) erstreckende Breite und eine sich parallel zu einer vertikalen Richtung (28) erstreckende Höhe aufweisen, wobei die Primäroptik (36), die Eingangslinse (40), die Blende (42) und die Ausgangslinse (44) jeweils eines Mikroprojektors (38) so angeordnet sind, dass aus der Primäroptik (36) austretendes Licht der Lichtquelle (32) die Eingangslinse (40) beleuchtet und aus der Eingangslinse (40) austretendes Licht der Lichtquelle (32) die Ausgangslinse (44) beleuchtet, **dadurch gekennzeichnet, dass** der Kraftfahrzeugscheinwerfer (24) Mikroprojektoren (46, 48, 50) aufweist, deren Breiten unterschiedlich sind und deren Höhen (h1, h2, h3) unterschiedlich sind.

2. Kraftfahrzeugscheinwerfer (24) nach Anspruch 1, **dadurch gekennzeichnet, dass** Brennpunkte der Eingangslinse von wenigstens einem der Mikroprojektoren in einer Ausbreitungsrichtung des aus der Eingangslinse austretenden Lichtes der Lichtquelle hinter der Blende des wenigstens einen Mikroprojektors liegen.

3. Kraftfahrzeugscheinwerfer (24) nach einem der vorhergehenden Ansprüche, **dadurch gekennzeichnet, dass** die Lichtaustrittsflächen der Ausgangslinsen von wenigstens zwei der Mikroprojektoren gleich stark gekrümmt sind.

4. Kraftfahrzeugscheinwerfer (24) nach einem der vorhergehenden Ansprüche, **dadurch gekennzeichnet, dass** der Kraftfahrzeugscheinwerfer (24) erste Mikroprojektoren (46) aufweist, die eine erste Breite und eine erste Höhe aufweisen, zweite Mikroprojektoren (48) aufweist, die eine zweite Breite und eine zweite Höhe aufweisen, und dritte Mikroprojektoren (50) aufweist, die eine dritte Breite und eine dritte Höhe aufweisen.

5. Kraftfahrzeugscheinwerfer nach Anspruch 4, **dadurch gekennzeichnet, dass** er mehrere Lichtmodule aufweist, wobei jedes Lichtmodul eine Lichtquelle (32), eine Licht (34) der Lichtquelle (32) sammelnde Primäroptik (36) und eine Mehrzahl von Mikroprojektoren (38) aufweist, von denen jeder jeweils eine Eingangslinse (40, eine Ausgangslinse (44) und eine zwischen der Eingangslinse und der Ausgangslinse angeordnete Blende (42) aufweist, wobei die Eingangslinse (40), die Blende (42) und die Ausgangslinse (44) eine sich bei bestimmungsgemäßer Verwendung des Kraftfahrzeugscheinwerfers (24) parallel zu einer horizontalen Richtung (30) erstreckende Breite (b) und eine sich parallel zu einer vertikalen Richtung (28) erstreckende Höhe (h) aufweisen, wobei die Primäroptik (36), die Eingangslinse (40), die Blende (42) und die Ausgangslinse (44) jeweils eines Mikroprojektors (38) so angeordnet sind, dass aus der Primäroptik (36) austretendes Licht der Lichtquelle (32) die Eingangslinse (40) beleuchtet und aus der Eingangslinse (40) austretendes Licht der Lichtquelle (32) die Ausgangslinse (44) beleuchtet.

6. Kraftfahrzeugscheinwerfer (24) nach Anspruch 5, **dadurch gekennzeichnet, dass** ein erstes Lichtmodul (54) der mehreren Lichtmodule nur erste Mikroprojektoren (46) aufweist, deren Breiten gleich sind und deren Höhen gleich sind, und dass ein zweites Lichtmodul (56) der mehreren Lichtmodule nur zweite Mikroprojektoren (48) aufweist, deren Breiten gleich sind und deren Höhen gleich sind, wobei sich die Breiten der ersten Mikroprojektoren (46) von den Breiten der zweiten Mikroprojektoren (50) unterscheiden und sich die Höhen der ersten Mikroprojektoren (46) von den Höhen der zweiten Mikroprojektoren (48) unterscheiden.

7. Kraftfahrzeugscheinwerfer (24) nach einem der vorhergehenden Ansprüche, **dadurch gekennzeichnet, dass** ein Lichtmodul (62) Mikroprojektoren (46, 48, 50) aufweist, deren Breiten unterschiedlich sind und deren Höhen unterschiedlich sind.

8. Kraftfahrzeugscheinwerfer (24) nach Anspruch 7, **dadurch gekennzeichnet, dass** eine Summe der Breiten von nebeneinander angeordneten Mikroprojektoren eines Lichtmoduls kleiner als 30 mm ist und dass eine Summe der Höhen übereinander angeordneter Mikroprojektoren eines Lichtmoduls kleiner als 30 mm ist.

9. Kraftfahrzeugscheinwerfer (24) nach einem der vorhergehenden Ansprüche, **dadurch gekennzeichnet, dass** die Breiten der Mikroprojektoren kleiner als 6 mm sind, die Höhen der Mikroprojektoren kleiner als 4 mm sind und die Tiefe jeweils einer Linse der Mikroprojektoren kleiner als 6 mm ist.

10. Kraftfahrzeugscheinwerfer (24) nach einem der vorhergehenden Ansprüche, **dadurch gekennzeichnet, dass** der Kraftfahrzeugscheinwerfer mehrere Lichtmodule aufweist, wobei jedes Lichtmodul eine Lichtquelle (32), eine Licht (34) der Lichtquelle (32) sammelnde Primäroptik (36) und eine Mehrzahl von Mikroprojektoren (38) aufweist, von denen jeder jeweils eine Eingangslinse (40, eine Ausgangslinse (44) und eine zwischen der Eingangslinse und der Ausgangslinse angeordnete Blende (42) aufweist, wobei die Eingangslinse (40), die Blende (42) und die Ausgangslinse (44) eine sich bei bestimmungsgemäßer Verwendung des Kraftfahrzeugscheinwerfers (24) parallel zu einer horizontalen Richtung (30) erstreckende Breite (b) und eine sich parallel zu einer vertikalen Richtung (28) erstreckende Höhe (h) aufweisen, wobei die Primäroptik (36), die Eingangslinse (40), die Blende (42) und die Ausgangslinse (44) jeweils eines Mikroprojektors (38) so angeordnet sind, dass aus der Primäroptik (36) austretendes Licht der Lichtquelle (32) die Eingangslinse (40) beleuchtet und aus der Eingangslinse (40) austretendes Licht der Lichtquelle (32) die Ausgangslinse (44) beleuchtet, **dadurch gekennzeichnet, dass** die lichtsammelnden Primäroptiken (36) von wenigstens zwei der Lichtmodule das in sie eintretende Licht unterschiedlich stark bündeln.

## Claims

1. Motor vehicle headlight (24) featuring a light module (30), which comprises a light source (32), a primary optics (36) that focuses the light (34) from the light source (32) and a plurality of micro projectors (38), each of which comprising an input lens (40), an output lens (44) and an aperture (42) that is arranged between the input lens and the output lens, wherein the input lens (40), the aperture (42) and the output lens (44) define, when the headlight (24) is used as intended, a width (b) that extends parallel to a horizontal direction (30) and a height (h) that extends parallel to a vertical direction (28), wherein the primary optics (36), the input lens (40), the aperture (42) and the output lens (44) of a respective micro projector (38) are arranged in such a way that light from the light source (32) that leaves the primary optics (36) illuminates the input lens (40), and the light from the light source (32) that leaves the input lens (40) illuminates the output lens (44), **characterized in that** the motor vehicle headlight (24) comprises micro projectors (46, 48, 50), whose widths (b) are different and whose heights (h1, h2, h3) are different.

2. Motor vehicle headlight (24) according to claim 1, **characterized in that** focal points of the input lens of at least one of the micro projectors are located within an expansion direction of the light of the light source that leaves the input lens behind the aperture of the at least one micro projector.

3. Motor vehicle headlight (24) according to any of the preceding claims, **characterized in that** the light output surfaces of the output lenses of at least two of the micro projectors feature the same curvature.

4. Motor vehicle headlight (24) according to any of the preceding claims, **characterized in that** the motor vehicle headlight (24) comprises first micro projectors (46) that feature a first width and a first height, second micro projectors (48) that feature a second width and a second height, and third micro projectors (50) that feature a third width and a third height.

5. Motor vehicle headlight according to claim 4, **characterized in that** it comprises several light modules, wherein each light module comprises a light source (32), a primary optics (36) that focuses the light (34) from light source (32) and a plurality of micro projectors (38), each of which comprising an input lens (40), an output lens (44) and an aperture (42) that is arranged between the input lens of the output lens, wherein the input lens (40), the aperture (42) and the output lens (44) define, when the headlight (24) is used as intended, a width (b) that extends parallel to a horizontal direction (30) and a height (h) that extends parallel to a vertical direction (28), wherein the primary optics (36), the input lens (40), the aperture (42) and the output lens (44) of a respective micro projector (38) are arranged in such a way, that light from the light source (32) that leaves the primary optics (36) illuminates the input lens (40), and the light from the light source (32) that leaves the input lens (40) illuminates the output lens (44).

6. Motor vehicle headlight (24) according to claim 5, **characterized in that** a first light module (54) of the several light modules only comprises first micro projectors (46), whose widths are equal and whose heights are equal, and that a second light module (56) of the several light modules only comprises second micro projectors (48), whose widths are equal and whose heights are equal, wherein the widths of the first micro projectors (46) are different from the widths of the second micro projectors (50) and wherein the heights of the first micro projectors are different from the heights of the second micro projectors.

7. Motor vehicle headlight (24) according to any of the preceding claims, **characterized in that** a light module (62) comprises micro projectors (46, 48, 50), whose widths are different and whose heights are different.

8. Motor vehicle headlight (24) according to claim 7, **characterized in that** a sum of the widths of adjacently arranged micro projectors of a light module is less than 30 mm and that a sum of the heights of micro projectors of a light module that are arranged on top of each other is less than 30 mm.

9. Motor vehicle headlight (24) according to any of the preceding claims, **characterized in that** the widths of the micro projectors are less than 6 mm, the heights of the micro projectors are less than 4 mm and the depths of each respective lens of the micro projectors is less than 6 mm.

10. Motor vehicle headlight (24) according to any of the preceding claims, the motor vehicle headlight comprises a plurality of light modules, each light module comprising a light source (32), a primary optics (36) that focuses the light (34) from light source (32) and a plurality of micro projectors (38), each of which comprising an input lens (40), an output lens (44) and an aperture (42) that is arranged between the input lens of the output lens, wherein the input lens (40), the aperture (42) and the output lens (44) define, when the headlight (24) is used as intended, a width (b) that extends parallel to a horizontal direction (30) and a height (h) that extends parallel to a vertical direction (28), wherein the primary optics (36), the input lens (40), the aperture (42) and the output lens (44) of a respective micro projector (38) are arranged in such a way, that light from the light source (32) that leaves the primary optics (36) illuminates the input lens (40), and the light from the light source (32) that leaves the input lens (40) illuminates the output lens (44), **characterized in that** the light-collecting primary optics (36) of at least two of the light modules bundle the light entering into them to different degrees.

## Revendications

1. Phare de véhicule automobile (24) avec un module lumineux (30) qui comporte une source lumineuse (32), une optique primaire collectant de la lumière (34) de la source lumineuse (32) et une pluralité de microprojecteurs (38) dont chacun comporte respectivement une lentille d'entrée (40), une lentille de sortie (44) et un diaphragme (42) disposé entre la lentille d'entrée et la lentille de sortie, la lentille d'entrée (40), le diaphragme (42) et la lentille de sortie (44) présentant, lors d'une utilisation conforme du phare de véhicule automobile (24), une largeur s'étendant parallèlement à une direction horizontale (30) et une hauteur s'étendant parallèlement à une direction verticale (28), l'optique primaire (36), la lentille d'entrée (40), le diaphragme (42) et la lentille de sortie (44) d'un microprojecteur (38) respectif étant disposés de façon que de la lumière de la source lumineuse (32) sortant de l'optique primaire (36) éclaire la lentille d'entrée (40) et que de la lumière de la source lumineuse (32) sortant de la lentille d'entrée (40) éclaire la lentille de sortie (44), **caractérisé en ce que** le phare de véhicule automobile (24) comprend des microprojecteurs (46, 48, 50) dont les largeurs sont différentes et dont le hauteurs (h1, h2, h3) sont différentes.

2. Phare de véhicule automobile (24) selon la revendication 1, **caractérisé en ce que** des points focaux de la lentille d'entrée d'au moins un des microprojecteurs sont situés, dans une direction de propagation de la lumière de la source lumineuse sortant de la lentille d'entrée, derrière le diaphragme dudit au moins un microprojecteur.

3. Phare de véhicule automobile (24) selon l'une des revendications précédentes, **caractérisé en ce que** les surfaces de sortie de lumière des lentilles de sortie d'au moins deux des microprojecteurs sont courbées de la même mesure.

4. Phare de véhicule automobile (24) selon l'une des revendications précédentes, **caractérisé en ce que** le phare de véhicule automobile (24) comprend des premiers microprojecteurs (46) présentant une première largeur et une première hauteur, des deuxièmes microprojecteurs (48) présentant une deuxième largeur et une deuxième hauteur et des troisièmes microprojecteurs (50) présentant une troisième largeur et une troisième hauteur.

5. Phare de véhicule automobile (24) selon la revendication 4, **caractérisé en ce qu'**il comporte plusieurs modules lumineux, chaque module lumineux comportant une source lumineuse (32), une optique primaire (36) collectant de la lumière (34) de la source lumineuse (32) et une pluralité de microprojecteurs (38) dont chacun comporte respectivement une lentille d'entrée (40), une lentille de sortie (44) et un diaphragme (42) disposé entre la lentille d'entrée et la lentille de sortie, la lentille d'entrée (40), le diaphragme (42) et la lentille de sortie (44) comportant, lors d'une utilisation conforme du phare de véhicule automobile (24), une largeur (b) s'étendant parallèlement à une direction (30) horizontale, une hauteur (h) s'étendant parallèlement à une direction (28) verticale, l'optique primaire (36), la lentille d'entrée (40), le diaphragme (42) et la lentille de sortie (44) d'un microprojecteur (38) respectif étant positionnés de manière telle que de la lumière de la source de lumière (32) sortant de l'optique primaire (36) éclaire la lentille d'entrée (40) et que de la lumière de la source lumineuse (32) sortant de la lentille d'entrée (40) éclaire la lentille de sortie (44).

6. Phare de véhicule automobile (24) selon la revendication 5, **caractérisé en ce qu'**un premier module lumineux (54) desdits plusieurs modules lumineux ne comprend que des premiers microprojecteurs (46), dont les largueurs sont égales et dont les hauteurs sont égales et **en ce qu'**un deuxième module lumineux (56) desdits plusieurs modules lumineux ne comprend que des deuxièmes microprojecteurs (48) dont les largueurs sont égales et dont les hauteurs sont égales, les largueurs des premiers microprojecteurs (46) se distinguant des largueurs des deuxièmes microjecteurs (50) et les hauteurs des premiers microprojecteurs (46) se distinguant des hauteurs des deuxièmes microprojecteurs (48).

7. Phare de véhicule automobile (24) selon une des revendications précédentes, **caractérisé en ce qu'**un module lumineux (62) comprend des microprojecteurs (46, 48, 50) dont les largueurs sont différentes et dont les hauteurs sont différentes.

8. Phare de véhicule automobile (24) selon la revendication 7, **caractérisé en ce qu'**une somme des largueurs de microprojecteurs d'un module lumineux disposés les uns à côté des autres est inférieure à 30 mm et **en ce qu'**une somme des hauteurs de microprojecteurs d'un module lumineux disposés les uns au-dessus des autres est inférieure à 30 mm.

9. Phare de véhicule automobile (24) selon l'une des revendications précédentes, **caractérisé en ce que** les largueurs des microprojecteurs sont inférieures à 6 mm, les hauteurs des microprojecteurs sont inférieures à 4 mm et que la profondeur d'une lentille respective des microprojecteurs est inférieure à 6mm.

10. Phare de véhicule automobile (24) selon l'une des revendications précédentes, **caractérisé en ce que** le phare de véhicule automobile comporte plusieurs modules lumineux, chaque module lumineux comportant une source lumineuse (32), une optique primaire (36) collectant de la lumière (34) de la source lumineuse (32) et une pluralité de microprojecteurs (38) dont chacun comporte respectivement une lentille d'entrée (40), une lentille de sortie (44) et un diaphragme (42) disposé entre la lentille d'entrée et la lentille de sortie, la lentille d'entrée (40), le diaphragme (42) et la lentille de sortie (44) comportant, lors d'une utilisation conforme du phare de véhicule automobile (24), une largeur (b) s'étendant parallèlement à une direction (30) horizontale, une hauteur (h) s'étendant parallèlement à une direction (28) verticale, l'optique primaire (36), la lentille d'entrée (40), le diaphragme (42) et la lentille de sortie (44) d'un microprojecteur (38) respectif étant positionnés de manière telle que de la lumière de la source de lumière (32) sortant de l'optique primaire (36) éclaire la lentille d'entrée (40) et que de la lumière de la source lumineuse (32) sortant de la lentille d'entrée (40) éclaire la lentille de sortie (44), **caractérisé en ce que** les optiques primaires (36) collectant de la lumière, d'au moins deux des modules lumineux focalisent différemment la lumière entrant dans elles.
